# EUROPÄISCHE PATENTSCHRIFT

(11) **EP 4 284 190 B1**
(45) Veröffentlichungstag und Bekanntmachung des Hinweises auf die Patenterteilung: **25.12.2024**
(21) Anmeldenummer: 22709197.2
(22) Anmeldetag: 27.01.2022
(51) Int. Cl.: A23K 10/18, A23K 50/60, A23K 50/75

(54) **HÜHNER-FUTTERMITTEL ENTHALTEND EINE ZUSAMMENSETZUNG, DIE MINDESTENS DREI BAKTERIENSTÄMME ENTHÄLT**
POULTRY FEED CONTAINING A COMPOSITION THAT CONTAINS AT LEAST THREE BACTERIAL STRAINS
ALIMENT POUR VOLAILLE CONTENANT UNE COMPOSITION CONTENANT AU MOINS TROIS SOUCHES BACTÉRIENNES

(30) Priorität: 01.02.2021 DE 102021200903
(43) Veröffentlichungstag der Anmeldung: 06.12.2023
(73) Patentinhaber: Rheinisch-Westfälische Technische Hochschule (RWTH) Aachen, 52062 Aachen (DE)
(72) Erfinder: CLAVEL, Thomas, 52074 Aachen (DE); ZENNER, Christian, 85551 Kirchheim (DE); KASPERS, Bernd, 85604 Zorneding (DE)
(74) Vertreter: Pfenning, Meinig & Partner mbB
(86) Internationale Anmeldenummer: PCT/EP2022/051944
(87) Internationale Veröffentlichungsnummer: WO 2022/162089

(56) Entgegenhaltungen:
- WO-A1-2015/003001
- KR-A- 20210 031 340
- US-A1- 2020 016 256
- SUGIHARTO SUGIHARTO: "Role of nutraceuticals in gut health and growth performance of poultry", JOURNAL OF THE SAUDI SOCIETY OF AGRICULTURAL SCIENCES, vol. 15, no. 2, 1 June 2016 (2016-06-01), SA, pages 99 - 111, XP055634050, ISSN: 1658-077X, DOI: 10.1016/j.jssas.2014.06.001
- YESHI YIN ET AL: "Exposure of different bacterial inocula to newborn chicken affects gut microbiota development and ileum gene expression", THE ISME JOURNAL, vol. 4, no. 3, 3 December 2009 (2009-12-03), London, pages 367 - 376, XP055493987, ISSN: 1751-7362, DOI: 10.1038/ismej.2009.128
- NEVELING DEON P ET AL: "Probiotics: an Antibiotic Replacement Strategy for Healthy Broilers and Productive Rearing", PROBIOTICS AND ANTIMICROBIAL PROTEINS, vol. 13, no. 1, 17 June 2020 (2020-06-17), pages 1 - 11, XP037381174, ISSN: 1867-1306, DOI: 10.1007/S12602-020-09640-Z
- NEVELING DEON P ET AL: "Genetic and Phenotypic Characteristics of a Multi-strain Probiotic for Broilers", CURRENT MICROBIOLOGY, SPRINGER-VERLAG, NEW YORK, vol. 77, no. 3, 12 December 2019 (2019-12-12), pages 369 - 387, XP037026174, ISSN: 0343-8651, [retrieved on 20191212], DOI: 10.1007/S00284-019-01797-3

## Beschreibung

Es wird ein Hühner-Futtermittel bereitgestellt, das eine Zusammensetzung enthält, die mindestens einen ersten Bakterienstamm enthält, der ausgewählt ist aus dem Bakterienphylum Firmicutes, mindestens einen zweiten Bakterienstamm enthält, der ausgewählt ist aus dem Bakterienphylum Bacteroidetes, und mindestens einen weiteren Bakterienstamm enthält, der ausgewählt ist aus dem Bakterienphylum Actinobacteria. Die in dem Hühner-Futtermittel enthaltene Zusammensetzung bzw. das Hühner-Futtermittel kann an frisch geschlüpfte Hühnerküken oral verabreicht werden (z.B. verfüttert werden). Dabei wird der Darm der Küken mit den Bakterienstämmen kolonisiert und die Konzentration von IgA-Antikörpern im Blut der Küken signifikant erhöht. Es ergibt sich dadurch eine beschleunigte Reifung des Immunsystems der Küken (speziell: signifikant erhöhte IgA-Werte im Darm und im Blut der Küken), was den Allgemeinzustand der Küken verbessert.

Geflügelfleisch ist weltweit die Hauptquelle von Nahrungsproteinen für den menschlichen Verzehr. In den letzten 80 Jahren wurden Broiler und Legehennen auf hohe Produktivitätsmerkmale, Wachstumsraten, Futterverwertung und Eierproduktion gezüchtet. Infektionen und ein schlechter Gesundheitszustand in den heutigen, gigantischen Produktionsanlagen stellen jedoch sowohl ethisch als auch wirtschaftlich große Probleme dar. Da die Europäische Union den Einsatz von Antibiotika als Wachstumsförderer verboten hat und die Ausbreitung von Antibiotikaresistenzen ein echtes Problem darstellt, sind Alternativen zur Verhinderung von Infektionen und zur Gesunderhaltung von Hühnerherden dringend erforderlich.

Hohe Hygienemaßnahmen einschließlich übertriebener Desinfektionspläne und restriktiver Zutritt zu den Einrichtungen sollen das Eindringen von Krankheitserregern in die Produktionsanlagen verhindern. Da Hühner jedoch im Gegensatz zu Säugetieren zur Besiedlung ihres Magen-Darm-Traktes vollständig auf exogene Mikroben angewiesen sind, ist eine sterile Brutumgebung ohne engen Kontakt zu erwachsenen Tieren nachteilig.

Das Darmmikrobiom des Huhnes ist ein vielfältiges und komplexes Ökosystem mit Hunderten von Bakterienarten, die Nahrungsbestandteile verstoffwechseln, die Entwicklung von Immunfunktionen unterstützen und vor Krankheitserregern schützen können. Der Gastrointestinaltrakt (GI) von Hühnern ist relativ komplex und besteht aus den oberen GI-Kompartimenten, dem Dünndarm, dem Zäkum und dem Dickdarm. Im Zäkum gibt es wichtige Standorte für die mikrobielle Fermentation und das Zäkum weist im Vergleich zu anderen Darmregionen eine höhere Diversität auf.

Seit den 1970er Jahren ist bekannt, dass eine Fütterung geschlüpfter Hühner mit Getreide- und Darminhalt von erwachsenen Vögeln die Infektion mit *Salmonella infantis* erfolgreich hemmt. Seit dem Jahr 1988 ist bekannt, dass eine Sprühanwendung von Darmhomogenaten bei Masthähnchen eine signifikant niedrigere Salmonelleninzidenz bei den Masthähnchen bewirkt. Seit dem Jahr 2016 ist bekannt, dass eine Verfütterung von Zäkalextrakten, die von mindestens drei Wochen alten Hühnern stammen, an frisch geschlüpfte Hühnerküken die Resistenz der Hühnerküken gegen *Salmonella enteritidis* fördert.

Obwohl diese Studien vielversprechende Ergebnisse in Bezug auf die Kolonisationsresistenz zeigten, ist die Bereitstellung von einem komplexen, undefinierten Stuhlmaterial zeitaufwändig, wenig komfortabel und mit hohen Kosten verbunden. Darüber hinaus kann bei einer Verfütterung von undefiniertem Stuhlmaterial nicht sichergestellt werden, dass das Stuhlmaterial auch tatsächlich zu einer Senkung der Salmonelleninzidenz führt, da dessen Zusammensetzung vor der Verfütterung nicht bekannt ist bzw. eine Bestimmung von dessen genauer Zusammensetzung vor dessen Verfütterung sehr aufwändig ist.

Die WO 2015/003001 A1 offenbart Verfahren zur Identifizierung von Nahrungsergänzungsmitteln, die das Wachstum eines Bakterienstamms im Darm eines Subjekts unterstützen, sowie daraus abgeleitete Zusammensetzungen.

Die US 2020/016256 A1 offenbart Zusammensetzungen, die einen oder mehrere Stämme von Bakterien der Nicht-Clostridia-Klasse umfassen, und Methoden zu deren Verwendung zur Desensibilisierung von Allergenen.

Sugiharto, S. (Journal of the Saudi Society of Agricultural Sciences, Bd. 15, Nr. 2, S. 99-111) offenbart nutrazeutische Verbindungen und deren Anwendung zur Verbesserung des mikrobiellen Ökosystems im Darm und des Immunsystems sowie der Wachstumsleistung von Geflügel.

Yeshi, Y. et al. (The ISME Journal, Bd. 4, Nr. 3, S. 367-376) offenbaren einen Einfluss von Umweltfaktoren auf die Entwicklung der Darmmikrobiota von Hühnern.

Ausgehend hiervon war es die Aufgabe der vorliegenden Erfindung, eine Zusammensetzung bzw. ein Futtermittel bereitzustellen, welche(s) die Nachteile aus dem Stand der Technik überwindet. Insbesondere sollte es mit der Zusammensetzung bzw. dem Futtermittel möglich sein, auf eine einfache, schnelle, reproduzierbare, komfortable und kostengünstige Art und Weise eine beschleunigte Reifung des Immunsystems der Küken zu ermöglichen und damit den Allgemeinzustand der Küken zu verbessern.

Die Aufgabe wird gelöst durch das Hühner-Futtermittel mit den Merkmalen von Anspruch 1. Die abhängigen Ansprüche zeigen vorteilhafte Weiterbildungen auf.

Erfindungsgemäß wird ein Hühner-Futtermittel bereitgestellt, das eine Zusammensetzung enthält, wobei die Zusammensetzung
a) mindestens einen ersten Bakterienstamm, der ausgewählt ist aus dem Bakterienphylum Firmicutes;
b) mindestens einen zweiten Bakterienstamm, der ausgewählt ist aus dem Bakterienphylum Bacteroidetes; und
c) mindestens einen weiteren Bakterienstamm, der ausgewählt ist aus dem Bakterienphylum Actinobacteria;
enthält,
dadurch gekennzeichnet, dass der mindestens eine erste Bakterienstamm ausgewählt ist aus der Gruppe der Bakterienspezies *Anaerotignum lactatifermentans* und *Ligilactobacillus salivarius.*

Es wurde gefunden, dass bei einer oralen Verabreichung über Gavagieren der im Hühner-Futtermittel enthaltenen Zusammensetzung an frisch geschlüpfte Hühnerküken auf eine einfache, schnelle, reproduzierbare, komfortable und kostengünstige Art und Weise eine beschleunigte Reifung des Immunsystems der Hühnerküken (signifikant erhöhte IgA-Werte und im Blut der Hühnerküken am Tag 25 und am Tag 39 nach Verabreichung und etwas erhöhte IgY-Werte im Blut der Hühnerküken am Tag 39 nach Verabreichung) erreicht werden kann. Ferner konnte gezeigt werden, dass nach der Verabreichung der im Hühner-Futtermittel enthaltenen Zusammensetzung an frisch geschlüpfte Hühnerküken der Darm der Hühnerküken mit zumindest dem mindestens einen ersten und dem mindestens einen zweiten Bakterienstamm kolonisiert wurde. Zusammen mit der gefundenen Erhöhung der IgA-Werte und IgG-Werte im Blut der Hühnerküken deutet dies darauf hin, dass die Hühnerküken eine erhöhte Resistenz gegenüber pathogenen Mikroorganismen (wie z.B. Salmonella-Bakterien und/oder Campylobacter-Bakterien) und einen verbesserten Allgemeinzustand aufweisen.

Die im Hühner-Futtermittel enthaltene Zusammensetzung kann dadurch gekennzeichnet sein, dass sie eine präparierte Zusammensetzung ist. Damit ist gemeint, dass die Zusammensetzung über ein präparatives Verfahren hergestellt wurde. Die Zusammensetzung kann (als Hühner-Futtermittel) in einem Behälter aus einem nicht-lebenden Material (z.B. einem Behälter aus Glas oder Kunststoff) vorliegen. Ferner kann die im Hühner-Futtermittel enthaltene Zusammensetzung nicht von tierischen Zellen umgeben sein, wobei die Zusammensetzung bevorzugt keine tierischen Zellen enthält. Bevorzugt ist die im Hühner-Futtermittel enthaltene Zusammensetzung frei von tierischem Eiweiß.

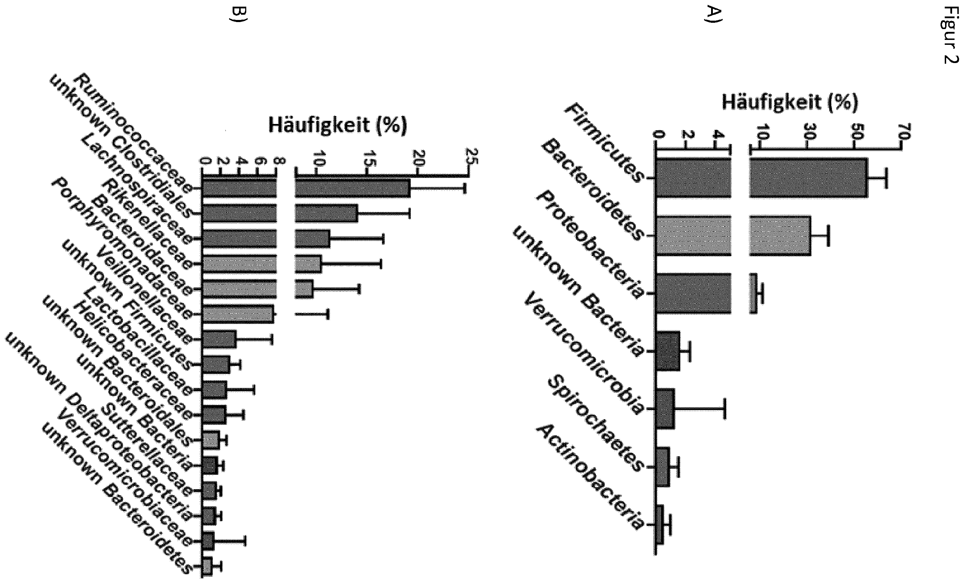

Erfindungsgemäß ist der mindestens eine erste Bakterienstamm ausgewählt aus der Gruppe der Bakterienspezies *Anaerotignum lactatifermentans* und *Ligilactobacillus salivarius.* Es wurde zudem herausgefunden, dass Bakterienstämme des Bakterienphylums Firmicutes zu mehr als 50% Häufigkeit im Darm von erwachsenen Hühnern vorkommen (siehe Figur 2A). Die Bezeichnung *"Ligilactobacillus salivarius"* stellt hierbei die neue Bezeichnung der ehemaligen Bezeichnung *"Lactobacillus salivarius"* dar und die Bezeichnung *"Limosilactobacillus oris"* stellt hierbei die neue Bezeichnung der ehemaligen Bezeichnung "*Lactobacillus oris"* dar.

Die im Hühner-Futtermittel enthaltene Zusammensetzung kann neben dem mindestens einen ersten Bakterienstamm mindestens einen weiteren Bakterienstamm enthalten, der ausgewählt ist aus dem Bakterienphylum Firmicutes, wobei der mindestens eine erste Bakterienstamm und der mindestens eine weitere Bakterienstamm zwei verschiedene Bakterienstämme sind. Der mindestens eine weitere Bakterienstamm ist bevorzugt ausgewählt aus der Gruppe der Bakterienfamilien Selenomonadaceae, Lachnospiraceae und Lactobacillaceae, wobei die mindestens zwei verschiedenen Bakterienstämme besonders bevorzugt jeweils aus unterschiedlichen Bakterienfamilien ausgewählt sind, insbesondere aus den Bakterienfamilien Selenomonadaceae und Lachnospiraceae. Ferner kann der mindestens einen weitere Bakterienstamm ausgewählt sein aus der Gruppe der Bakterienspezies *Megamonas funiformis*, *Anaerotignum lactatifermentans, Ligilactobacillus salivarius, Lactobacillus crispatus und Limosilactobacillus oris*, wobei die mindestens zwei verschiedenen Bakterienstämme besonders bevorzugt jeweils aus unterschiedlichen Bakterienspezies ausgewählt sind, insbesondere aus den Bakterienspezies *Megamonas funiformis und Anaerotignum lactatifermentans.* Es ist vorteilhaft, wenn die Zusammensetzung mindestens zwei Bakterienstämme aus dem Bakterienphylum Firmicutes enthält, da nachgewiesen wurde, dass Bakterienstämme dieses Bakterienphylums in einer hohen Häufigkeit im Darm von Hühnerküken vorkommen (siehe Figur 2A). Die Bakterienspezies *Anaerotignum lactatifermentans* ist vorteilhaft, da sie für die Hühnerküken eine Butyrat-Quelle bereitstellt, die vom Darm-Epithel der Hühnerküken als Energiequelle genutzt werden kann und sich positiv auf die Reifung einer Immuntoleranz im Darm der Hühnerküken auswirkt.

Ferner kann die im Hühner-Futtermittel enthaltene Zusammensetzung neben dem mindestens einen ersten Bakterienstamm mindestens zwei weitere Bakterienstämme enthalten, die ausgewählt sind aus dem Bakterienphylum Firmicutes, wobei der mindestens eine erste Bakterienstamm und die mindestens zwei weiteren Bakterienstämme drei verschiedene Bakterienstämme sind. Die mindestens zwei weiteren Bakterienstämme sind bevorzugt ausgewählt aus der Gruppe der Bakterienfamilien Selenomonadaceae, Lachnospiraceae und Lactobacillaceae, wobei die mindestens drei verschiedenen Bakterienstämme besonders bevorzugt jeweils aus unterschiedlichen Bakterienfamilien ausgewählt sind. Ferner sind die mindestens zwei weiteren Bakterienstämme bevorzugt ausgewählt aus der Gruppe der Bakterienspezies Me*gamonas funiformis*, *Anaerotignum lactatifermentans*, *Ligilactobacillus salivarius*, *Lactobacillus crispatus und Limosilactobacillus oris*, wobei die mindestens drei verschiedenen Bakterienstämme besonders bevorzugt jeweils aus unterschiedlichen Bakterienspezies ausgewählt sind. Es ist vorteilhaft, wenn die Zusammensetzung mindestens drei Bakterienstämme aus dem Bakterienphylum Firmicutes enthält, da nachgewiesen wurde, dass Bakterienstämme dieses Bakterienphylums in einer hohen Häufigkeit im Darm von Hühnerküken vorkommen (siehe Figur 2A). Die Bakterienspezies *Ligilactobacillus salivarius* ist ein besonders bevorzugter Bestandteil der Zusammensetzung, da bei dieser Spezies unter in-vitro-Bedingungen eine Hemmung des Wachstums auf das Bakterium *Campylobacter jejuni* beobachtet wurde.

Abgesehen davon kann die im Hühner-Futtermittel enthaltene Zusammensetzung neben dem mindestens einen ersten Bakterienstamm mindestens drei weitere Bakterienstämme enthalten, die ausgewählt sind aus dem Bakterienphylum Firmicutes, wobei der mindestens eine erste Bakterienstamm und die mindestens drei weiteren Bakterienstämme vier verschiedene Bakterienstämme sind. Die mindestens drei weiteren Bakterienstämme sind bevorzugt ausgewählt aus der Gruppe der Bakterienfamilien Selenomonadaceae, Lachnospiraceae und Lactobacillaceae, wobei mindestens drei der vier verschiedenen Bakterienstämme besonders bevorzugt jeweils aus unterschiedlichen Bakterienfamilien ausgewählt sind. Ferner können die mindestens drei weiteren Bakterienstämme ausgewählt sein aus der Gruppe der Bakterienspezies *Megamonas funiformis*, *Anaerotignum lactatifermentans*, *Ligilactobacillus salivarius*, *Lactobacillus crispatus und Limosilactobacillus oris*, wobei die mindestens vier verschiedenen Bakterienstämme besonders bevorzugt jeweils aus unterschiedlichen Bakterienspezies ausgewählt sind. Es ist vorteilhaft, wenn die Zusammensetzung mindestens vier Bakterienstämme aus dem Bakterienphylum Firmicutes enthält, da nachgewiesen wurde, dass Bakterienstämme dieses Bakterienphylums in einer hohen Häufigkeit im Darm von Hühnerküken vorkommen (siehe Figur 2A).

In einer bevorzugten Ausgestaltungsform enthält die im Hühner-Futtermittel enthaltene Zusammensetzung neben dem mindestens einen ersten Bakterienstamm mindestens vier weitere Bakterienstämme, die ausgewählt sind aus dem Bakterienphylum Firmicutes, wobei der mindestens eine erste Bakterienstamm und die mindestens vier weiteren Bakterienstämme fünf verschiedene Bakterienstämme sind. Die mindestens vier weiteren Bakterienstämme sind bevorzugt ausgewählt aus der Gruppe der Bakterienfamilien Selenomonadaceae, Lachnospiraceae und Lactobacillaceae, wobei besonders bevorzugt mindestens drei der fünf verschiedenen Bakterienstämme aus der Gruppe der Bakterienfamilie Lactobacillaceae stammen, mindestens einer der fünf Bakterienstämme aus der Gruppe der Bakterienfamilie Selenomonadaceae stammt und mindestens einer der fünf Bakterienstämme aus der Bakterienfamilie der Lachnospiraceae stammt. Ferner können die mindestens vier weiteren Bakterienstämme ausgewählt sein aus der Gruppe der Bakterienspezies *Megamonas funiformis*, *Anaerotignum lactatifermentans*, *Ligilactobacillus salivarius*, *Lactobacillus crispatus und Limosilactobacillus oris*, wobei die mindestens fünf verschiedenen Bakterienstämme besonders bevorzugt jeweils aus unterschiedlichen Bakterienspezies ausgewählt sind. Die Bakterienfamilien Selenomonadaceae, Lachnospiraceae und Lactobacillaceae bzw. die Bakterienspezies *Megamonas funiformis, Anaerotignum lactatifermentans, Ligilactobacillus salivarius, Lactobacillus crispatus und Limosilactobacillus oris* sind besonders bevorzugt, da diese Familien bzw. Spezies in einer hohen Häufigkeit in dem Darm von Hühnerküken gefunden wurden und angenommen wird, dass jede von Ihnen zu dem vorteilhaften Effekt der Immunmodulation (signifikante Steigerung der IgA-Konzentration im Blut der Küken und Resistenz gegen pathogene Mikroorganismen) beiträgt.

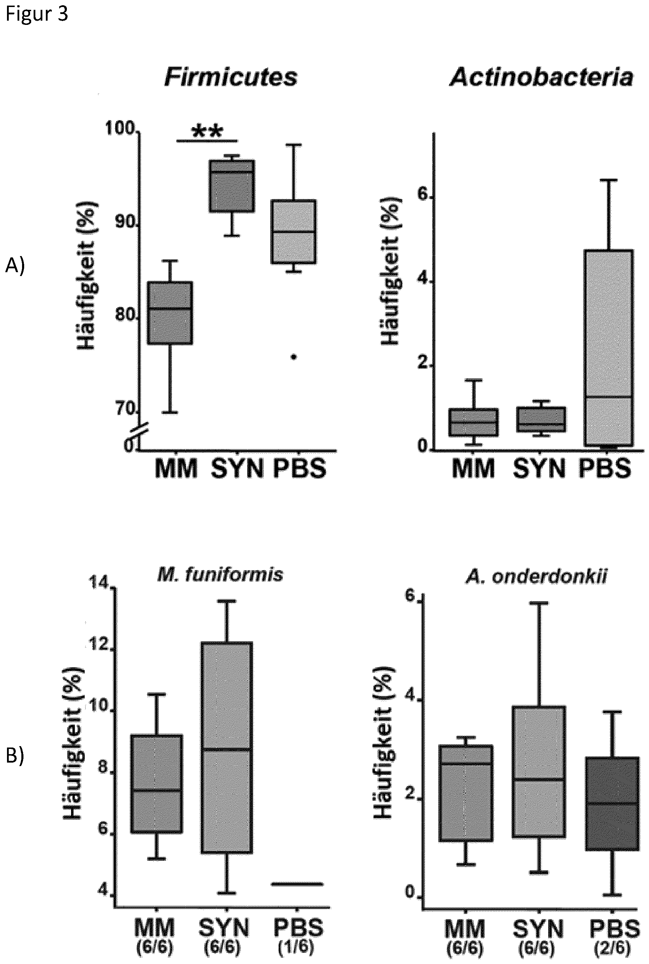

Der mindestens eine zweite Bakterienstamm der im Hühner-Futtermittel enthaltenen Zusammensetzung ist bevorzugt ausgewählt aus Gruppe der Bakterienfamilien Rikenellaceae und Bacteriodaceae, besonders bevorzugt ausgewählt aus der Bakterienfamilie Rikenellaceae. Ferner kann der mindestens zweite Bakterienstamm der Zusammensetzung ausgewählt sein aus der Gruppe der Bakterienspezies *Alistipes onderdonkii* und *Bacteroides dorei*, besonders bevorzugt ausgewählt sein aus der Bakterienspezies *Alistipes onderdonkii.* Die Bezeichnung *"Bacteroides dorei"* bezieht sich auf das gleiche Bakterium wie die Bezeichnung *"Phocaeicola dorei"*, sodass beide Bezeichnungen Synonyme für das gleiche Bakterium darstellen. Die Bakterienfamilie Rikenellaceae bzw. die Bakterienspezies *Alistipes onderdonkii* ist besonders bevorzugt, da diese Familie bzw. Spezies in einer hohen Häufigkeit im Darm von Hühnerküken gefunden wurde (siehe Figuren 2A und 2B) und sie als wesentlich für den beobachteten vorteilhaften Effekt der Immunmodulation (signifikante Steigerung der IgA-Konzentration im Blut der Küken und Resistenz gegen pathogene Mikroorganismen) angesehen werden (siehe Kolonisierung des Hühnerdarms in Figur 3B).

In einer bevorzugten Ausgestaltungsform enthält die im Hühner-Futtermittel enthaltene Zusammensetzung mindestens zwei verschiedene Bakterienstämme, die ausgewählt sind aus dem Bakterienphylum Bacteroidetes. Die mindestens zwei verschiedenen Bakterienstämme sind bevorzugt ausgewählt aus der Gruppe der Bakterienfamilien Rikenellaceae und Bacteriodaceae, wobei besonders bevorzugt mindestens ein Bakterienstamm ausgewählt ist aus der Bakterienfamilie Rikenellaceae und mindestens ein Bakterienstamm ausgewählt ist aus der Bakterienfamilie Bacteriodaceae. Ferner können die mindestens zwei verschiedenen Bakterienstämme ausgewählt sein aus der Gruppe der Bakterienspezies *Alistipes onderdonkii* und *Bacteroides dorei*, wobei besonders bevorzugt mindestens ein Bakterienstamm ausgewählt ist aus der Bakterienspezies *Alistipes onderdonkii* und mindestens ein Bakterienstamm ausgewählt ist aus der Bakterienspezies *Bacteroides dorei.* Die Bakterienfamilien Rikenellaceae und Bacteriodaceae bzw. die Bakterienspezies *Alistipes onderdonkii* und *Bacteroides dorei* sind besonders bevorzugt, da diese Familien bzw. Spezies in einer hohen Häufigkeit in dem Darm von Hühnerküken gefunden wurden (siehe Figuren 2A und 2B) und angenommen wird, dass sie jeweils zu dem vorteilhaften Effekt der Immunmodulation (signifikante Steigerung der IgA-Konzentration im Blut der Küken und Resistenz gegen pathogene Mikroorganismen) beitragen.

Die im Hühner-Futtermittel enthaltene Zusammensetzung kann ferner mindestens einen weiteren Bakterienstamm enthalten, der ausgewählt ist aus dem Bakterienphylum Proteobacteria, wobei der mindestens eine weitere Bakterienstamm bevorzugt ausgewählt ist aus der Bakterienfamilie Enterobacteriaceae. Ferner kann der mindestens eine weitere Bakterienstamm ausgewählt sein aus der Gattung *Escherichia.* Die Bakterienfamilie Enterobacteriaceae bzw. die Bakteriengattung *Escherichia* ist besonders bevorzugt, da diese Familie bzw. Gattung in einer hohen Häufigkeit in dem Darm von Hühnerküken gefunden wurden (siehe Figur 2A) und angenommen wird, dass sie zu dem vorteilhaften Effekt der Immunmodulation (signifikante Steigerung der IgA-Konzentration im Blut der Küken und Resistenz gegen pathogene Mikroorganismen) beitragen.

Die im Hühner-Futtermittel enthaltene Zusammensetzung enthält erfindungsgemäß mindestens einen weiteren Bakterienstamm, der ausgewählt ist aus dem Bakterienphylum Actinobacteria. Der mindestens eine weitere Bakterienstamm ist bevorzugt ausgewählt aus der Bakterienfamilie Bifidobacteriaceae. Ferner kann der mindestens eine weitere Bakterienstamm ausgewählt sein aus der Bakterienspezies *Bifidobacterium saeculare.* Die Bakterienfamilie Bifidobacteriaceae bzw. die Bakterienspezies *Bifidobacterium saeculare* ist besonders bevorzugt, da angenommen wird, dass sie zu dem vorteilhaften Effekt der Immunmodulation (signifikante Steigerung der IgA-Konzentration im Blut der Küken und Resistenz gegen pathogene Mikroorganismen) beitragen, obwohl sie nur in einer geringen Häufigkeit im Darm von Hühnerküken nachgewiesen werden konnten (siehe Figur 2A).

Die im Hühner-Futtermittel enthaltene Zusammensetzung kann flüssig sein und bevorzugt in einer Kapsel vorliegen. Alternativ kann die im Hühner-Futtermittel enthaltene Zusammensetzung im Wesentlichen fest sein und bevorzugt als Tablette, Granulat oder Pulver vorliegen.

Die im Hühner-Futtermittel enthaltene Zusammensetzung kann den mindestens einen ersten Bakterienstamm in einer Menge von 10⁸ CFU/cm³, bevorzugt mindestens 10⁹ CFU/cm³, bezogen auf das Gesamtvolumen der Zusammensetzung oder bezogen auf das Gesamtvolumen des Hühner-Futtermittels, enthalten.

Ferner kann die im Hühner-Futtermittel enthaltene Zusammensetzung den mindestens einen zweiten Bakterienstamm in einer Menge von mindestens 10⁸ CFU/cm³, bevorzugt mindestens 10⁹ CFU/cm³, bezogen auf das Gesamtvolumen der Zusammensetzung oder bezogen auf das Gesamtvolumen des Hühner-Futtermittels, enthalten.

Zudem kann die im Hühner-Futtermittel enthaltene Zusammensetzung mindestens einen Bakterienstamm aus dem Bakterienphylum Proteobacteria in einer Menge von mindestens 10⁸ CFU/cm³, bevorzugt mindestens 10⁹ CFU/cm³, bezogen auf das Gesamtvolumen der Zusammensetzung oder bezogen auf das Gesamtvolumen des Hühner-Futtermittels, enthalten, wobei der Bakterienstamm bevorzugt ausgewählt ist aus der Bakterienfamilie Enterobacteriaceae, besonders bevorzugt ausgewählt ist aus der Bakteriengattung *Escherichia.*

Abgesehen davon kann die im Hühner-Futtermittel enthaltene Zusammensetzung den mindestens einen weiteren Bakterienstamm aus dem Bakterienphylum Actinobacteria in einer Menge von mindestens 10⁸ CFU/cm³, bevorzugt mindestens 10⁹ CFU/cm³, bezogen auf das Gesamtvolumen der Zusammensetzung oder bezogen auf das Gesamtvolumen des Hühner-Futtermittels, enthalten, wobei der Bakterienstamm bevorzugt ausgewählt ist aus der Bakterienfamilie Bifidobacteriaceae, besonders bevorzugt ausgewählt aus der Bakterienspezies *Bifidobacterium saeculare.*

Darüber hinaus kann die im Hühner-Futtermittel enthaltene Zusammensetzung mindestens einen Bakterienstamm ausgewählt aus der Bakterienspezies *Ligilactobacillus salivarius* in einer Menge von mindestens 10⁸ CFU/cm³, bevorzugt mindestens 10⁹ CFU/cm³, bezogen auf das Gesamtvolumen der Zusammensetzung oder bezogen auf das Gesamtvolumen des Hühner-Futtermittels, enthalten.

Ferner kann die im Hühner-Futtermittel enthaltene Zusammensetzung mindestens einen Bakterienstamm ausgewählt aus der Bakterienspezies *Lactobacillus crispatus* in einer Menge von mindestens 10⁸ CFU/cm³, bevorzugt mindestens 10⁹ CFU/cm³, bezogen auf das Gesamtvolumen der Zusammensetzung oder bezogen auf das Gesamtvolumen des Hühner-Futtermittels, enthalten.

Darüber hinaus kann die im Hühner-Futtermittel enthaltene Zusammensetzung mindestens einen Bakterienstamm ausgewählt aus der Bakterienspezies *Limosilactobacillus oris* in einer Menge von mindestens 10⁸ CFU/cm³, bevorzugt mindestens 10⁹ CFU/cm³, bezogen auf das Gesamtvolumen der Zusammensetzung oder bezogen auf das Gesamtvolumen des Hühner-Futtermittels, enthalten.

Die genannten Mengen der Bakterienstämme (in CFU/cm³) werden als vorteilhaft angesehen, um eine zügige und zuverlässige Kolonisierung des Darms von Hühnerküken zu ermöglichen.

Das erfindungsgemäße Hühner-Futtermittel ist bevorzugt ein Hühnerküken-Futtermittel.

Das Hühner-Futtermittel enthält bevorzugt eine nicht-mikrobielle Eiweißquelle, bevorzugt eine pflanzliche Eiweißquelle (z.B. zumindest Bestandteile von Soja, Erbsen und/oder Bohnen) und/oder eine tierische Eiweißquelle (z.B. zumindest Bestandteile von Würmern). Die Eiweißquelle ermöglicht ein schnelles Wachstum der Hühner. Das Hühner-Futtermittel kann in einer Menge von 15 bis 25 Gew.-%, bevorzugt 16 bis 20 Gew.-%, bezogen auf die Gesamtmasse des Hühner-Futtermittels, Rohprotein enthalten.

Abgesehen davon enthält das Hühner-Futtermittel bevorzugt eine nicht-mikrobielle Kohlenhydratquelle, bevorzugt eine pflanzliche Kohlenhydratquelle (z.B. zumindest Bestandteile von Mais, Gerste, Weizen, Hafer, Reis, Soja und/oder Kartoffeln). Die Kohlenhydratquelle trägt zu einem schnellen Wachstum der Hühner bei. Das Hühner-Futtermittel kann in einer Menge von 4 bis 10 Gew.-%, bevorzugt 5 bis 7 Gew.-%, bezogen auf die Gesamtmasse des Hühner-Futtermittels, Rohfasern enthalten.

Darüber hinaus enthält das Hühner-Futtermittel bevorzugt eine nicht-mikrobielle Fettquelle, bevorzugt eine pflanzliche Fettquelle (z.B. zumindest Bestandteile von Sonnenblumenkernen). Die Fettquelle leistet einen Beitrag zu einem schnellen Wachstum der Hühner. Das Hühner-Futtermittel kann in einer Menge von 2 bis 5 Gew.-%, bevorzugt 3 bis 4 Gew.-%, bezogen auf die Gesamtmasse des Hühner-Futtermittels, Rohfett enthalten.

Ferner enthält das Hühner-Futtermittel bevorzugt eine anorganische Calciumquelle (z.B. zumindest Bestandteile von Muschelkalk). Die anorganische Calciumquelle ermöglicht den Hühnern einen starken Knochenaufbau. Die Calciumquelle kann in einer Menge von 0,5 bis 2,0 Gew.-%, bevorzugt 1,0 bis 1,5 Gew.-%, bezogen auf die Gesamtmasse des Hühner-Futtermittels, in dem Hühner-Futtermittel vorhanden sein.

Zudem kann das Hühner-Futtermittel eine Carotinquelle, bevorzugt eine pflanzliche β-Carotinquelle, enthalten (z.B. zumindest Bestandteile von Karotten). Die β-Carotinquelle ermöglicht es den Hühnern, gelbe Läufe zu entwickeln. Alternativ oder zusätzlich kann das Hühner-Futtermittel Vitamin A enthalten, bevorzugt in einer Menge von 8000 bis 10000 LE./kg.

Das Hühner-Futtermittel kann Methionin (beispielsweise in gebundener oder in freier Form) in einer Menge von 0,2 bis 0,6 Gew.-%, bevorzugt 0,3 bis 0,5 Gew.-%, besonders bevorzugt 0,35 bis 0,42 Gew.-%, bezogen auf die Gesamtmasse des Hühner-Futtermittels, enthalten. Dies ist bevorzugt, um den Hühnern ein schnelleres Wachstum zu ermöglichen.

Das Hühner-Futtermittel liegt bevorzugt in Form von Partikeln (Körnern) vor, wobei bevorzugt nur maximal 25%, besonders bevorzugt nur maximal 20%, ganz besonders bevorzugt nur maximal 15%, insbesondere nur maximal 10%, aller Partikel des Hühner-Futtermittels eine Größe von ≥ 2,5 mm aufweisen.

Anhand der nachfolgenden Figuren und Beispiele soll der erfindungsgemäße Gegenstand näher erläutert werden, ohne diesen auf die hier dargestellten, spezifischen Ausführungsformen einschränken zu wollen.

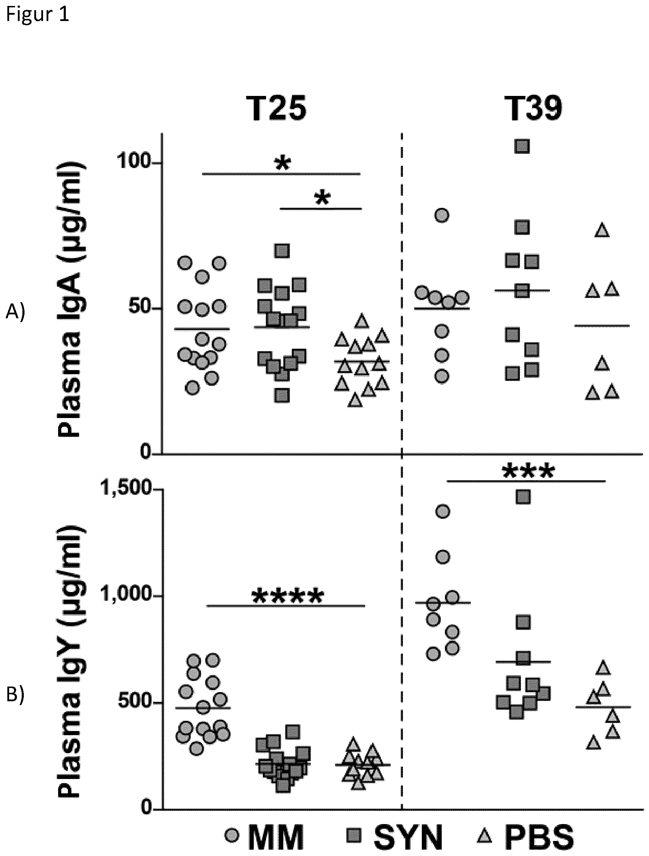

Figur 1 zeigt die Ergebnisse einer Bestimmung der Konzentration von IgA-Antikörpern (Figur 1A) und Konzentration von IgY-Antikörpern (Figur 1B) im Blut von Hühnerküken 25 Tage nach dem Schlüpfen ("T25") bzw. 39 Tage nach dem Schlüpfen ("T39") für die drei unterschiedlichen Gruppen "MM", "SYN" und "PBS" (Details siehe Beispiele).

Figur 2 zeigt die Ergebnisse einer Bestimmung der Häufigkeit von Bakterienstämmen verschiedener Bakterienphyla (Figur 2A) und verschiedener Bakterienspezies (Figur 2B) im Darm von Hühnerküken 25 Tage nach dem Schlüpfen für die Gruppe "MM" (Details siehe Beispiele).

Figur 3 zeigt die Ergebnisse einer Bestimmung der Häufigkeit von Bakterienstämmen verschiedener Bakterienphyla (Figur 3A) und verschiedener Bakterienspezies (Figur 3B) im Darm von Hühnerküken 25 Tage nach dem Schlüpfen für die drei unterschiedlichen Gruppen "MM", "SYN" und "PBS" (Details siehe Beispiele).

### Beispiel 1 - Isolation und Kultivierung von Bakterienstämmen zur Bereitstellung einer Zusammensetzung

Zunächst wurden ein PBS-Puffer und ein Wilkins-Chalgren-Anaerobic-Medium (kurz: WCA-Medium) hergestellt. Beide Lösungen wurden mit 0,5 g/L L-Cystein und 0,2 g/L DTT als Reduktionsmittel für die Sauerstoffreduktion ergänzt. 80 ml davon wurden in 100 ml Schott-Flaschen mit Butylkautschuk-Stopfen abgefüllt. Die Lösungen wurden für ca. 10 min mit einem Gasgemisch aus 95% Kohlendioxid und 5% Formiergas 95/5 (95% Stickstoff/ 5% Wasserstoff) begast, um anoxische Bedingungen zu ermöglichen, und anschließend mit einem Standardprogramm für flüssige Lösungen autoklaviert.

Anschließend wurde zunächst der Jejunal-, Zäkum- oder Kolongehalt von (geopferten) Hühnern in die sterile und anoxische PBS-Lösung überführt. Nach ca. 2 min kräftigem Schütteln wurden die Schott-Flaschen ca. 1 min stehen gelassen, um die Trümmer zu sedimentieren. Ungefähr 5 ml der Aufschlämmung wurden wiederum mit steriler Spritze und Nadel in steriles und anoxisches WCA-Medium in Probenflaschen überführt, um anoxische Bedingungen aufrechtzuerhalten.

Die Probenflaschen wurden zur Kryokonservierung sofort ins Labor gebracht, indem die Aufschlämmung 1:1 mit sterilem und anoxischem WCA-Medium, das 40% Glyzerin enthielt, gemischt und sofort auf Trockeneis schockgefrostet wurde. Die Proben wurden bis zur weiteren Verarbeitung bei -80°C gelagert.

Die gefrorenen Proben wurden zu einer anaeroben Arbeitsstation (MBraun^{®}) gebracht, die das oben erwähnte Gasgemisch enthielt. Nach serieller Verdünnung von 10⁻² bis 10⁻⁵ in steriler und anoxischem PBS-Puffer wurden die Proben auf verschiedene Platten mit festen Kulturmedien aufgetragen. Die Platten wurden bei 37°C inkubiert. Das Auftreten neuer Kolonien wurde täglich kontrolliert. Einzelne Kolonien wurden mindestens dreimal gepickt und gestreift, um Reinkulturen einzelner Bakterienstämme zu gewährleisten, und dann mit der Hungate-Technik und nach den Anweisungen der DSMZ für die Kultivierung streng anaerober Bakterien in flüssiges Medium überführt. Die Hungate der Reinkulturen wurden bei 37°C inkubiert, gegebenenfalls unter Schütteln, bis ein dichtes Wachstum der jeweiligen Bakterienstämme beobachtet wurde. Von den gewachsenen Bakterienstämmen wurden Kryo-Aliquots in WCA-Medium mit 40% Glycerin erstellt und diese bei -80°C bis zur weiteren Verwendung gelagert.

Die einzelnen Bakterienstämme der einzelnen Kulturen wurden über MALDI-Biotypisierung und Sequenzierung identifiziert. Flüssigkulturen wurden zentrifugiert, das Zellpellet gewaschen und wie eine einzelne Kolonie nach den Anweisungen des Herstellers behandelt. Die Identität der Isolate wurde durch Amplifikation und eine fast vollständige Sequenzierung des 16S rRNA-Gens herausgefunden. Ein Schwellenwert von 98,7% 16S rRNA-Gensequenz-Identität wurde als positive Identifizierung einer Bakterienspezies angesehen.

Ein Kryo-Aliquot (300 µl) von jedem Bakterienstamm wurde verwendet, um Hungate-Röhrchen, die mit 9 ml WCA-Medium gefüllt waren, vor dem Wachstum bei 37 °C für 2 Tage zu inokulieren. Um eine Zusammensetzung bereitzustellen, wurden die resultierenden Kulturen, also mindestens eine Kultur eines Bakterienstamms, der ausgewählt ist aus dem Bakterienphylum Firmicutes und mindestens eine Kultur eines Bakterienstamms, der ausgewählt ist aus dem Bakterienphylum Bacteroidetes, zu gleichen Volumina gemischt.

Die in diesem Beispiel dargestellte Zusammensetzung (im Folgenden auch als "SYN" bezeichnet) enthielt neben mindestens einem Bakterienstamm aus dem Bakterienphylum Firmicutes und dem mindestens einen Bakterienstamm aus dem Bakterienphylum Bacteroidetes auch Bakterienstämme aus den Bakterienphyla Proteobacteria und Actinobacteria. Die genaue Zusammensetzung ist in der unten angegebenen Tabelle dargestellt, wobei neben dem Bakterienstamm die jeweilige Bakterienfamilie und das jeweilige Bakterienphylum angegeben sind, dem der jeweilige Bakterienstamm zugeordnet ist.

**Tabelle**

| **Bakterienstamm** | **Bakterienfamilie** | **Bakterienphylum** |
|---|---|---|
| *Megamonas funiformis* | Selenomonadaceae | Firmicutes |
| *Alistipes onderdonkii* | Rikenellaceae | Bacteroidetes |
| *Anaerotignum lactatifermentans* | Lachnospiraceae | Firmicutes |
| *Limosilactobacillus oris* | Lactobacillaceae | Firmicutes |
| *Lactobacillus crispatus* | Lactobacillaceae | Firmicutes |
| *Ligilactobacillus salivarius* | Lactobacillaceae | Firmicutes |
| *Bacteroides dorei* | Bacteroidaceae | Bacteroidetes |
| *Escherichia* sp. | Enterobacteriaceae | Proteobacteria |
| *Bifidobacterium saeculare* | Bifidobacteriaceae | Actinobacteria |

Zur Lagerung in Form von Kryo-Stocks wurde die resultierende Zusammensetzung ("SYN") mit dem gleichen Volumen an sterilem WCA-Medium, ergänzt mit 40% Glycerin als Kryoschutzmittel, versetzt und bei -80 °C gelagert.

### Beispiel 2 - Verabreichung der Zusammensetzung an Hühner

Befruchtete Eier von Hühner der genetischen Linie M11 (eine LSL-Linie mit homozygotem MHC-Haplotyp B2/2), die vom Institut für Nutztiergenetik des Friedrich-Löffler-Instituts (Mariensee) zur Verfügung gestellt wurden, wurden in einem Grumbach-Brutschrank BSS160 für 21 Tage bei 37,8 °C und 50-55% Luftfeuchtigkeit bebrütet (am 20. Tag auf 70% erhöht, um einen optimalen Schlupf zu erreichen).

Die geschlüpften Hühner wurden zu gleichen Teilen in drei Gruppen aufgeteilt und sofort in die Versuchstieranlage gebracht.

Der ersten Gruppe der Hühner wurde die Zusammensetzung ("SYN") verfüttert und der zweiten Gruppe der Hühner wurde eine sterile PBS-Lösung ("PBS") verfüttert, wobei die Flüssigkeiten jeweils über eine Knopfkanüle direkt in den Kropf der Hühner verabreicht wurden. Dieses Verfahren wurde am Tag 1 und 2 nach dem Schlupf wiederholt. Die erste und zweite Gruppe der Hühner wurde unter strengen hygienischen Bedingungen gehalten. Dagegen wurde die dritte Gruppe der Hühner mit mütterlichen Mikrobiota ("MM") behandelt, wobei hierfür die Voliere, in der die Hühner gehalten wurden, mit frisch gesammeltem Kot von erwachsenen LSL-Legehennen bestrichen wurde (500 g anfänglich und dann 200 g an den Tagen 1 und 2 nach dem Schlupf).

Nach der Keulung von sechs Tieren jeder Gruppe am 25. Tag wurde deren Zäkuminhalt gesammelt und im DNAstab (INVITEK, Ref. 1038111200) bei - 80 °C gelagert. Die Ergebnisse für die erhaltenen Mikrobiota bei der Gruppe "MM" sind in Figur 2 und 3 dargestellt. In der Figur 3 ist zudem ein Vergleich der Häufigkeit einzelner Bakterienstämme in der Gruppe "MM" im Vergleich zur Gruppe "SYN" und Gruppe "PBS" dargestellt.

### Beispiel 3 - Wirkung der Zusammensetzung auf Hühner

Von den Hühnern wurden am 25. Tag nach der Geburt und am 39. Tag nach der Geburt Heparin-Blutproben gesammelt und die Konzentration der Immunglobuline IgA und IgY in den Blutproben mittels ELISA quantifiziert. Hierfür wurden 96-Well-Platten über Nacht mit 2 µg/ml oder 2,5 µg/ml murinen monoklonalen Antikörpern (mABs) in Beschichtungspuffer (pH 9,6) für IgA (A1, SouthernBiotech, Ref. 8330-01 SBA) und IgY (G1, SouthernBiotech, Ref. 8320-01 SBA) beschichtet. Die Platten wurden in 1% Casein (Calbiochem, Ref. 218682) in PBS (pH 7,4) blockiert, gefolgt von nachfolgenden Inkubationen bei Raumtemperatur mit seriellen Verdünnungen von Hühnerplasma, Gallen- oder Zäkuminhaltsproben. HRP-gekoppelte mABs gegen Hühner-IgA (A3-HRP) und IgY (G1-HRP) wurden in einer Konzentration von 1:10.000 in 1% Casein in PBS-T (pH 7,4) verwendet, gefolgt von einem Nachweis mit Tetramethylbenzidin (TMB). Gibco^{™} Hühnerserum (ThermoFisher, Ref. 16110082) wurde als Standard zur Bestimmung der Gesamtmenge der Immunglobuline verwendet. Es wurde mit 81 µg/ml für IgA und 1.685 µg/ml für IgY quantifiziert.

Bei Hühnern, die nach dem Schlupf dem Kot der Mutter ausgesetzt waren (d.h. Hühner der Gruppe "MM") konnten im Vergleich zu Hühnern, die unter strengen hygienischen Bedingungen gehalten wurden, signifikant erhöhte IgA- und IgY-Spiegel, d.h. signifikante Verschiebungen der mukosalen Immunreaktionen, beobachtet werden (siehe Figur 1A und 1B). Die durchgeführte 16S rRNA-Amplicon-Sequenzierung deutet an, dass die Erhöhung der mukosalen Immunreaktion in der Hühnergruppe "MM" auf eine erhöhte bakterielle Diversität im Darm zurückzuführen ist, insbesondere auf Bakterienstämme der Bakterienphyla Firmicutes und Bacteroidetes, die in einer sehr hohen Häufigkeit erfasst wurden (Figur 2A und 2B).

Bei Hühnern, die unter strengen hygienischen Bedingungen gehalten wurden, aber denen nach dem Schlupf die Zusammensetzung ("SYN") verabreicht wurde, konnten gegenüber der "PBS"-Kontrollgruppe etwas erhöhte IgY-Spiegel und signifikant erhöhte IgA-Spiegel erfasst werden (siehe Figur 1A und 1B). Die in dieser Gruppe erfassten IgA-Spiegel waren hierbei sehr nah an den IgA-Spiegeln der Gruppe "MM", also denen von der Gruppe an Hühnern, die nach dem Schlupf dem Kot der Mutter ausgesetzt waren.

Dieses Ergebnis zeigt, dass die Zusammensetzung SYN eine Erhöhung der mukosalen Immunreaktionen bewirkt. Die durchgeführte 16S rRNA-Amplikon-Sequenzierung deutet zudem darauf hin, dass die Erhöhung der mukosalen Immunreaktion in der Hühnergruppe "SYN" auf Unterschiede in der Kolonisierung des Darms der Hühner verglichen mit der Kontrollgruppe "PBS" zurückzuführen ist. Insbesondere zeigte sich nach der Behandlung mit "SYN" im Vergleich zur Kontrollgruppe "PBS" eine erhöhte Kolonisierung des Darms mit Bakterien aus dem Phylum Firmicutes und eine verringerte Kolonisierung mit Bakterien aus dem Phylum Actinobacteria (siehe Figur 3A). Im Gegensatz zu Hühnern der Gruppe "PBS" konnte zudem neben dem Bakterienstamm *M*. *funiformis* aus dem Bakterienphylum Firmicutes auch ein erhöhtes Vorkommen des Bakterienstamms *A*. *onderdonkii* aus dem Bakterienphylum Bacteroidetes erfasst werden (siehe Figur 3B). Die Vorkommen dieser beiden Bakterienstämme bei der Gruppe "SYN" lag sehr nah an den Vorkommen dieser beiden Bakterienstämme in der Referenzgruppe "MM".

Bei Hühnern, die unter strengen hygienischen Bedingungen gehalten wurden, aber denen nach dem Schlupf PBS-Lösung ("PBS") verabreicht wurde, konnten weder signifikant erhöhte IgA-Spiegel noch signifikant erhöhte IgY-Spiegel erfasst werden (siehe Figur 1A und 1B), d.h. letztlich keine signifikanten Verschiebungen der mukosalen Immunreaktionen beobachtet werden. Es wird vermutet, dass dies auf eine mangelnde Kolonisierung des Darms dieser Hühner mit Bakterienstämmen aus den Bakterienphyla Firmicutes und Bacteroidetes zurückzuführen ist, ggf. auch auf eine (dadurch bedingte) erhöhte Kolonisierung mit Bakterienstämmen aus dem Bakterienphylum Actinobacterium (siehe Figur 3A).

## Patentansprüche

1. Hühner-Futtermittel enthaltend eine Zusammensetzung, die
a) mindestens einen ersten Bakterienstamm, der ausgewählt ist aus dem Bakterienphylum Firmicutes;
b) mindestens einen zweiten Bakterienstamm, der ausgewählt ist aus dem Bakterienphylum Bacteroidetes; und
c) mindestens einen weiteren Bakterienstamm, der ausgewählt ist aus dem Bakterienphylum Actinobacteria;
enthält,
**dadurch gekennzeichnet, dass** der mindestens eine erste Bakterienstamm ausgewählt ist aus der Gruppe der Bakterienspezies *Anaerotignum lactatifermentans* und *Ligilactobacillus salivarius.*

2. Hühner-Futtermittel gemäß Anspruch 1, **dadurch gekennzeichnet, dass** die Zusammensetzung
i) eine präparierte Zusammensetzung ist; und/oder
ii) in einem Behälter aus einem nicht-lebenden Material vorliegt; und/oder
iii) nicht von tierischen Zellen umgeben ist, bevorzugt keine tierischen Zellen enthält.

3. Hühner-Futtermittel gemäß einem der Ansprüche 1 oder 2, **dadurch gekennzeichnet, dass** die Zusammensetzung neben dem mindestens einen ersten Bakterienstamm mindestens einen weiteren Bakterienstamm enthält, der ausgewählt ist aus dem Bakterienphylum Firmicutes, wobei der mindestens eine erste Bakterienstamm und der mindestens eine weitere Bakterienstamm zwei verschiedene Bakterienstämme sind, wobei der mindestens eine weitere Bakterienstamm bevorzugt ausgewählt ist aus der Gruppe der
i) Bakterienfamilien Selenomonadaceae, Lachnospiraceae und Lactobacillaceae, wobei die mindestens zwei verschiedenen Bakterienstämme besonders bevorzugt jeweils aus unterschiedlichen Bakterienfamilien ausgewählt sind, insbesondere aus den Bakterienfamilien Selenomonadaceae und Lachnospiraceae; und/oder
ii) Bakterienspezies *Megamonas funiformis*, *Anaerotignum lactatifermentans, Ligilactobacillus salivarius, Lactobacillus crispatus und Limosilactobacillus oris,* wobei die mindestens zwei verschiedenen Bakterienstämme besonders bevorzugt jeweils aus unterschiedlichen Bakterienspezies ausgewählt sind, insbesondere aus den Bakterienspezies *Megamonas funiformis und Anaerotignum lactatifermentans.*

4. Hühner-Futtermittel gemäß einem der Ansprüche 1 bis 3, **dadurch gekennzeichnet, dass** die Zusammensetzung neben dem mindestens einen ersten Bakterienstamm mindestens zwei weitere Bakterienstämme enthält, die ausgewählt sind aus dem Bakterienphylum Firmicutes, wobei der mindestens eine erste Bakterienstamm und die mindestens zwei weiteren Bakterienstämme drei verschiedene Bakterienstämme sind, wobei die mindestens zwei weiteren Bakterienstämme bevorzugt ausgewählt sind aus der Gruppe der
i) Bakterienfamilien Selenomonadaceae, Lachnospiraceae und Lactobacillaceae, wobei die mindestens drei verschiedenen Bakterienstämme besonders bevorzugt jeweils aus unterschiedlichen Bakterienfamilien ausgewählt sind; und/oder
ii) Bakterienspezies *Megamonas funiformis*, *Anaerotignum lactatifermentans, Ligilactobacillus salivarius, Lactobacillus crispatus und Limosilactobacillus oris,* wobei die mindestens drei verschiedenen Bakterienstämme besonders bevorzugt jeweils aus unterschiedlichen Bakterienspezies ausgewählt sind.

5. Hühner-Futtermittel gemäß einem der Ansprüche 1 bis 4, **dadurch gekennzeichnet, dass** die Zusammensetzung neben dem mindestens einen ersten Bakterienstamm mindestens drei weitere Bakterienstämme enthält, die ausgewählt sind aus dem Bakterienphylum Firmicutes, wobei der mindestens eine erste Bakterienstamm und die mindestens drei weiteren Bakterienstämme vier verschiedene Bakterienstämme sind, wobei die mindestens drei weiteren Bakterienstämme bevorzugt ausgewählt sind aus der Gruppe der
i) Bakterienfamilien Selenomonadaceae, Lachnospiraceae und Lactobacillaceae, wobei mindestens drei der vier verschiedenen Bakterienstämme besonders bevorzugt jeweils aus unterschiedlichen Bakterienfamilien ausgewählt sind; und/oder
ii) Bakterienspezies *Megamonas funiformis*, *Anaerotignum lactatifermentans, Ligilactobacillus salivarius, Lactobacillus crispatus und Limosilactobacillus oris,* wobei die mindestens vier verschiedenen Bakterienstämme besonders bevorzugt jeweils aus unterschiedlichen Bakterienspezies ausgewählt sind.

6. Hühner-Futtermittel gemäß einem der Ansprüche 1 bis 5, **dadurch gekennzeichnet, dass** die Zusammensetzung neben dem mindestens einen ersten Bakterienstamm mindestens vier weitere Bakterienstämme enthält, die ausgewählt sind aus dem Bakterienphylum Firmicutes, wobei der mindestens eine erste Bakterienstamm und die mindestens vier weiteren Bakterienstämme fünf verschiedene Bakterienstämme sind, wobei die mindestens vier weiteren Bakterienstämme bevorzugt ausgewählt sind aus der Gruppe der
i) Bakterienfamilien Selenomonadaceae, Lachnospiraceae und Lactobacillaceae, wobei besonders bevorzugt mindestens drei der fünf verschiedenen Bakterienstämme aus der Gruppe der Bakterienfamilie Lactobacillaceae stammen, mindestens einer der fünf Bakterienstämme aus der Gruppe der Bakterienfamilie Selenomonadaceae stammt und mindestens einer der fünf Bakterienstämme aus der Bakterienfamilie der Lachnospiraceae stammt; und/oder
ii) Bakterienspezies *Megamonas funiformis*, *Anaerotignum lactatifermentans, Ligilactobacillus salivarius, Lactobacillus crispatus und Limosilactobacillus oris,* wobei die mindestens fünf verschiedenen Bakterienstämme besonders bevorzugt jeweils aus unterschiedlichen Bakterienspezies ausgewählt sind.

7. Hühner-Futtermittel gemäß einem der Ansprüche 1 bis 6, **dadurch gekennzeichnet, dass** der mindestens eine zweite Bakterienstamm ausgewählt ist aus der Gruppe der
i) Bakterienfamilien Rikenellaceae und Bacteriodaceae, besonders bevorzugt ausgewählt ist aus der Bakterienfamilie Rikenellaceae; und/oder
ii) Bakterienspezies *Alistipes onderdonkii* und *Bacteroides dorei*, besonders bevorzugt ausgewählt ist aus der Bakterienspezies *Alistipes onderdonkii.*

8. Hühner-Futtermittel gemäß einem der Ansprüche 1 bis 7, **dadurch gekennzeichnet, dass** die Zusammensetzung mindestens zwei verschiedene Bakterienstämme enthält, die ausgewählt sind aus dem Bakterienphylum Bacteroidetes, wobei die mindestens zwei verschiedenen Bakterienstämme bevorzugt ausgewählt sind aus der Gruppe der
i) Bakterienfamilien Rikenellaceae und Bacteriodaceae, wobei besonders bevorzugt mindestens ein Bakterienstamm ausgewählt ist aus der Bakterienfamilie Rikenellaceae und mindestens ein Bakterienstamm ausgewählt ist aus der Bakterienfamilie Bacteriodaceae; und/oder
ii) Bakterienspezies *Alistipes onderdonkii* und *Bacteroides dorei*, wobei besonders bevorzugt mindestens ein Bakterienstamm ausgewählt ist aus der Bakterienspezies *Alistipes onderdonkii* und mindestens ein Bakterienstamm ausgewählt ist aus der Bakterienspezies *Bacteroides dorei.*

9. Hühner-Futtermittel gemäß einem der Ansprüche 1 bis 8, **dadurch gekennzeichnet, dass** die Zusammensetzung ferner mindestens einen weiteren Bakterienstamm enthält, der ausgewählt ist aus dem Bakterienphylum Proteobacteria, wobei der mindestens eine weitere Bakterienstamm bevorzugt ausgewählt ist aus der
i) Bakterienfamilie Enterobacteriaceae; und/oder
ii) Bakteriengattung *Escherichia,* bevorzugt der Bakterienspezies *Escherichia marmotae.*

10. Hühner-Futtermittel gemäß einem der Ansprüche 1 bis 9, **dadurch gekennzeichnet, dass** der weitere Bakterienstamm , der ausgewählt ist aus dem Bakterienphylum Actinobacteria, ausgewählt ist aus der
i) Bakterienfamilie Bifidobacteriaceae; und/oder
ii) Bakterienspezies *Bifidobacterium saeculare.*

11. Hühner-Futtermittel gemäß einem der Ansprüche 1 bis 10, **dadurch gekennzeichnet, dass** die Zusammensetzung
i) flüssig ist und bevorzugt in einer Kapsel vorliegt; oder
ii) im Wesentlichen fest ist und bevorzugt als Tablette, Granulat oder Pulver vorliegt.

12. Hühner-Futtermittel gemäß einem der Ansprüche 1 bis 11, **dadurch gekennzeichnet, dass** die Zusammensetzung
i) den mindestens einen ersten Bakterienstamm in einer Menge von mindestens 10⁸ CFU/cm³, bevorzugt mindestens 10⁹ CFU/cm³, bezogen auf das Gesamtvolumen der Zusammensetzung, enthält; und/oder
ii) den mindestens einen zweiten Bakterienstamm in einer Menge von mindestens 10⁸ CFU/cm³, bevorzugt mindestens 10⁹ CFU/cm³, bezogen auf das Gesamtvolumen der Zusammensetzung, enthält; und/oder
iii) mindestens einen Bakterienstamm aus dem Bakterienphylum Proteobacteria in einer Menge von mindestens 10⁸ CFU/cm³, bevorzugt mindestens 10⁹ CFU/cm³, bezogen auf das Gesamtvolumen der Zusammensetzung, enthält, wobei der Bakterienstamm bevorzugt ausgewählt ist aus der Bakterienfamilie Enterobacteriaceae, besonders bevorzugt ausgewählt ist aus der Bakteriengattung E*scherichia*; und/oder
iv) den mindestens einen weiteren Bakterienstamm aus dem Bakterienphylum Actinobacteria in einer Menge von mindestens 10⁸ CFU/cm³, bevorzugt mindestens 10⁹ CFU/cm³, bezogen auf das Gesamtvolumen der Zusammensetzung, enthält, wobei der Bakterienstamm bevorzugt ausgewählt ist aus der Bakterienfamilie Bifidobacteriaceae, besonders bevorzugt ausgewählt ist aus der Bakterienspezies *Bifidobacterium saeculare*; und/oder
v) mindestens einen Bakterienstamm ausgewählt aus der Bakterienspezies *Ligilactobacillus* salivarius in einer Menge von mindestens 10⁸ CFU/cm³, bevorzugt mindestens 10⁹ CFU/cm³, bezogen auf das Gesamtvolumen der Zusammensetzung, enthält; und/oder
vi) mindestens einen Bakterienstamm ausgewählt aus der Bakterienspezies *Lactobacillus crispatus* in einer Menge von mindestens 10⁸ CFU/cm³, bevorzugt mindestens 10⁹ CFU/cm³, bezogen auf das Gesamtvolumen der Zusammensetzung, enthält; und/oder
vii) mindestens einen Bakterienstamm ausgewählt aus der Bakterienspezies *Limosilactobacillus oris* in einer Menge von mindestens 10⁸ CFU/cm³, bevorzugt mindestens 10⁹ CFU/cm³, bezogen auf das Gesamtvolumen der Zusammensetzung, enthält.

13. Hühner-Futtermittel gemäß einem der Ansprüche 1 bis 12, wobei das Futtermittel ein Hühnerküken-Futtermittel ist.

14. Hühner-Futtermittel gemäß einem der Ansprüche 1 bis 13, **dadurch gekennzeichnet, dass** das Hühner-Futtermittel
a) eine nicht-mikrobielle Eiweißquelle, bevorzugt eine pflanzliche Eiweißquelle und/oder eine tierische Eiweißquelle, besonders bevorzugt zumindest Bestandteile von Soja, Erbsen, Bohnen und/oder von Würmern, enthält; und/oder
b) eine nicht-mikrobielle Kohlenhydratquelle, bevorzugt eine pflanzliche Kohlenhydratquelle, besonders bevorzugt zumindest Bestandteile von Mais, Gerste, Weizen, Hafer, Reis, Soja und/oder Kartoffeln, enthält; und/oder
c) eine nicht-mikrobielle Fettquelle, bevorzugt eine pflanzliche Fettquelle, besonders bevorzugt zumindest Bestandteile von Sonnenblumenkernen, enthält; und/oder
d) eine anorganische Calciumquelle, bevorzugt zumindest Bestandteile von Muschelkalk, enthält; und/oder
e) eine Carotinquelle, bevorzugt eine pflanzliche β-Carotinquelle, besonders bevorzugt zumindest Bestandteile von Karotten, enthält; und/oder
f) Methionin in einer Menge von 0,2 bis 0,6 Gew.-%, bevorzugt 0,3 bis 0,5 Gew.-%, besonders bevorzugt 0,35 bis 0,42 Gew.-%, bezogen auf die Gesamtmasse des Hühner-Futtermittels, enthält.

## Claims

1. A chicken feed comprising a composition which comprises
a) at least one first bacteria strain, which is selected from the bacterial phylum Firmicutes;
b) at least one second bacteria strain, which is selected from the bacterial phylum Bacteroidetes; and
c) at least one further bacteria strain, which is selected from the bacterial phylum Actinobacteria;
**characterized in that** the at least one first bacteria strain is selected from the group of bacteria species *Anaerotignum lactatifermentans* and *Ligilactobacillus salivarius.*

2. The chicken feed according to claim 1, **characterized in that** the composition
i) is a prepared composition; and/or
ii) is present in a container made of a non-living material; and/or
iii) is not surrounded by animal cells, preferably does not comprise any animal cells.

3. The chicken feed according to any one of claims 1 or 2, **characterized in that** the composition comprises, besides the at least one first bacteria strain, at least one further bacteria strain which is selected from the bacterial phylum Firmicutes, wherein the at least one first bacteria strain and the at least one further bacteria strain are two different bacteria strains, wherein the at least one further bacteria strain is preferably selected from the group of
i) bacteria families Selenomonadaceae, Lachnospiraceae and Lactobacillaceae, wherein the at least two different bacteria strains are particularly preferably in each case selected from different bacteria families, in particular from the bacteria families Selenomonadaceae and Lachnospiraceae; and/or
ii) bacteria species *Megamonas funiformis*, *Anaerotignum lactatifermentans, Ligilactobacillus salivarius, Lactobacillus crispatus and Limosilactobacillus oris,* wherein the at least two different bacteria strains are particularly preferably in each case selected from different bacteria species, in particular from the bacteria species *Megamonas funiformis and Anaerotignum lactatifermentans.*

4. The chicken feed according to any one of claims 1 or 3, **characterized in that** the composition comprises, besides the at least one first bacteria strain, at least two further bacteria strains which are selected from the bacterial phylum Firmicutes, wherein the at least one first bacteria strain and the at least two further bacteria strains are three different bacteria strains, wherein the at least two further bacteria strains are preferably selected from the group of
i) bacteria families Selenomonadaceae, Lachnospiraceae and Lactobacillaceae, wherein the at least three different bacteria strains are particularly preferably in each case selected from different bacteria families; and/or
ii) bacteria species *Megamonas funiformis*, *Anaerotignum lactatifermentans, Ligilactobacillus salivarius, Lactobacillus crispatus and Limosilactobacillus oris,* wherein the at least three different bacteria strains are particularly preferably in each case selected from different bacteria species.

5. The chicken feed according to any one of claims 1 or 4, **characterized in that** the composition comprises, besides the at least one first bacteria strain, at least three further bacteria strains which are selected from the bacterial phylum Firmicutes, wherein the at least one first bacteria strain and the at least three further bacteria strains are four different bacteria strains, wherein the at least three further bacteria strains are preferably selected from the group of
i) bacteria families Selenomonadaceae, Lachnospiraceae and Lactobacillaceae, wherein at least three of the four different bacteria strains are particularly preferably in each case selected from different bacteria families; and/or
ii) bacteria species *Megamonas funiformis*, *Anaerotignum lactatifermentans, Ligilactobacillus salivarius, Lactobacillus crispatus and Limosilactobacillus oris,* wherein the at least four different bacteria strains are particularly preferably in each case selected from different bacteria species.

6. The chicken feed according to any one of claims 1 or 5, **characterized in that** the composition comprises, besides the at least one first bacteria strain, at least four further bacteria strains which are selected from the bacterial phylum Firmicutes, wherein the at least one first bacteria strain and the at least four further bacteria strains are five different bacteria strains, wherein the at least four further bacteria strains are preferably selected from the group of
i) bacteria families Selenomonadaceae, Lachnospiraceae and Lactobacillaceae, wherein particularly preferably at least three of the five different bacteria strains originate from the group of the bacteria family Lactobacillaceae, at least one of the five bacteria strains originates from the group of the bacteria family Selenomonadaceae, and at least one of the five bacteria strains originates from the bacteria family Lachnospiraceae; and/or
ii) bacteria species *Megamonas funiformis*, *Anaerotignum lactatifermentans, Ligilactobacillus salivarius, Lactobacillus crispatus and Limosilactobacillus oris,* wherein the at least five different bacteria strains are particularly preferably in each case selected from different bacteria species.

7. The chicken feed according to any one of claims 1 to 6, **characterized in that** the at least one second bacteria strain is selected from the group of
i) bacteria families Rikenellaceae and Bacteriodaceae, particularly preferably is selected from the bacteria family Rikenellaceae; and/or
ii) bacteria species *Alistipes onderdonkii* and *Bacteroides dorei,* particularly preferably is selected from the bacteria species *Alistipes onderdonkii.*

8. The chicken feed according to any one of claims 1 to 7, **characterized in that** the composition comprises at least two different bacteria strains which are selected from the bacterial phylum Bacteroidetes, wherein the at least two different bacteria strains are preferably selected from the group of
i) bacteria families Rikenellaceae and Bacteriodaceae, wherein particularly preferably at least one bacteria strain is selected from the bacteria family Rikenellaceae and at least one bacteria strain is selected from the bacteria family Bacteriodaceae; and/or
ii) bacteria species *Alistipes onderdonkii* and *Bacteroides dorei,* wherein particularly preferably at least one bacteria strain is selected from the bacteria species *Alistipes onderdonkii* and at least one bacteria strain is selected from the bacteria species *Bacteroides dorei.*

9. The chicken feed according to any one of claims 1 to 8, **characterized in that** the composition further comprises at least one further bacteria strain, which is selected from the bacterial phylum Proteobacteria, wherein the at least one further bacteria strain is preferably selected from the
i) bacteria family Enterobacteriaceae; and/or
ii) bacteria genus *Escherichia,* preferably the bacteria species *Escherichia marmotae.*

10. The chicken feed according to any one of claims 1 to 9, **characterized in that** the further bacteria strain which is selected from the bacteria phylum Actinobacteria is selected from the
i) bacteria family Bifidobacteriaceae; and/or
ii) bacteria species *Bifidobacterium saeculare.*

11. The chicken feed according to any one of claims 1 to 10, **characterized in that** the composition
i) is liquid and is preferably present in a capsule; or
ii) is substantially solid and is preferably present in the form of a tablet, granulate or powder.

12. The chicken feed according to any one of claims 1 to 11, **characterized in that** the composition
i) comprises the at least one first bacteria strain in an amount of at least 10⁸ CFU/cm³, preferably at least 10⁹ CFU/cm³, in relation to the total volume of the composition; and/or
ii) comprises the at least one second bacteria strain in an amount of at least 10⁸ CFU/cm³, preferably at least 10⁹ CFU/cm³, in relation to the total volume of the composition; and/or
iii) comprises at least one bacteria strain from the bacterial phylum Proteobacteria in an amount of at least 10⁸ CFU/cm³, preferably at least 10⁹ CFU/cm³, in relation to the total volume of the composition, wherein the bacteria strain is preferably selected from the bacteria family Enterobacteriaceae, particularly preferably is selected from the bacteria genus *Escherichia;* and/or
iv) comprises the at least one further bacteria strain from the bacterial phylum Actinobacteria in an amount of at least 10⁸ CFU/cm³, preferably at least 10⁹ CFU/cm³, in relation to the total volume of the composition, wherein the bacteria strain is preferably selected from the bacteria family Bifidobacteriaceae, particularly preferably is selected from the bacteria genus *Bifidobacterium saeculare;* and/or
v) comprises at least one bacteria strain selected from the bacteria species *Ligilactobacillus* salivarius in an amount of at least 10⁸ CFU/cm³, preferably at least 10⁹ CFU/cm³, in relation to the total volume of the composition; and/or
vi) comprises at least one bacteria strain selected from the bacteria species *Lactobacillus crispatus* in an amount of at least 10⁸ CFU/cm³, preferably at least 10⁹ CFU/cm³, in relation to the total volume of the composition; and/or
vii) comprises at least one bacteria strain selected from the bacteria species *Limosilactobacillus oris* in an amount of at least 10⁸ CFU/cm³, preferably at least 10⁹ CFU/cm³, in relation to the total volume of the composition.

13. The chicken feed according to any one of claims 1 to 12, wherein the feed is a chicks feed.

14. The chicken feed according to any one of claims 1 to 13, **characterized in that** the chicken feed
a) comprises a non-microbial protein source, preferably a plant protein source and/or an animal protein source, particularly preferably at least constituents of soya, peas, beans and/or worms; and/or
b) comprises a non-microbial carbohydrate source, preferably a plant carbohydrate source, particularly preferably at least constituents of maize, barley, wheat, oats, rice, soya and/or potatoes; and/or
c) comprises a non-microbial fat source, preferably a plant fat source, particularly preferably at least constituents of sunflower seeds; and/or
d) an inorganic calcium source, preferably at least constituents of shell limestone; and/or
e) comprises a carotene source, preferably a plant β-carotene source, particularly preferably at least constituents of carrots; and/or
f) comprises methionine in an amount of 0.2 to 0.6 wt.%, preferably 0.3 to 0.5 wt.%, particularly preferably 0.35 to 0.42 wt.%, in relation to the total mass of the chicken feed.

## Revendications

1. Nourriture pour poules contenant une composition qui contient
a) au moins une première souche bactérienne qui est choisie parmi le phylum bactérien Firmicutes ;
b) au moins une deuxième souche bactérienne qui est choisie parmi le phylum bactérien Bacteroidetes ; et
c) au moins une souche bactérienne supplémentaire choisie parmi le phylum bactérien Actinobacteria ;
**caractérisée en ce que** la au moins une première souche bactérienne est choisie dans le groupe des espèces bactériennes *Anaerotignum lactatifermentans* et *Ligilactobacillus salivarius.*

2. Nourriture pour poules selon la revendication 1, **caractérisée en ce que** la composition
i) est une composition préparée ; et/ou
ii) se trouve dans un récipient en un matériau non vivant ; et/ou
iii) n'est pas entourée de cellules animales, de préférence ne contient pas de cellules animales.

3. Nourriture pour poules selon les revendications 1 ou 2, **caractérisée en ce que** la composition contient, en plus de la au moins une première souche bactérienne, au moins une souche bactérienne supplémentaire qui est choisie parmi le phylum bactérien Firmicutes, dans laquelle la au moins une première souche bactérienne et la au moins une souche bactérienne supplémentaires sont deux souches bactériennes différentes, dans laquelle la au moins une souche bactérienne supplémentaire est choisie de préférence dans le groupe
i) des familles bactériennes Selenomonadaceae, Lachnospiraceae et Lactobacillaceae, dans laquelle les au moins deux souches bactériennes différentes sont choisies de manière particulièrement préférée parmi différentes familles bactériennes, en particulier parmi les familles bactériennes Selenomonadaceae et Lachnospiraceae ; et/ou
ii) des espèces bactériennes *Megamonas funiformis*, *Anaerotignum lactatifermentans, Ligilactobacillus salivarius, Lactobacillus crispatus* et *Limosilactobacillus oris,* dans laquelle les au moins deux souches bactériennes différentes sont choisies de manière particulièrement préférée parmi différentes espèces bactériennes, en particulier parmi les espèces bactériennes Me*gamonasfuniformis* et *Anaerotignum lactatifermentans.*

4. Nourriture pour poules selon l'une quelconque des revendications 1 à 3, **caractérisée en ce que** la composition contient, en plus de la au moins une première souche bactérienne, au moins deux souches bactériennes supplémentaires qui sont choisies parmi le phylum bactérien Firmicutes, dans laquelle la au moins une première souche bactérienne et les au moins deux souches bactériennes supplémentaires sont trois souches bactériennes différentes, dans laquelle les au moins deux souches bactériennes supplémentaires sont de préférence choisies dans le groupe
i) des familles bactériennes Selenomonadaceae, Lachnospiraceae et Lactobacillaceae, dans laquelle les au moins trois souches bactériennes différentes sont choisies de manière particulièrement préférée parmi différentes familles bactériennes ; et/ou
ii) des espèces bactériennes *Megamonas funiformis*, *Anaerotignum lactatifermentans, Ligilactobacillus salivarius, Lactobacillus crispatus* et *Limosilactobacillus oris,* dans laquelle les au moins trois souches bactériennes différentes sont choisies de manière particulièrement préférée parmi différentes espèces bactériennes.

5. Nourriture pour poules selon l'une quelconque des revendications 1 à 4, **caractérisée en ce que** la composition contient, en plus de la au moins une première souche bactérienne, au moins trois souches bactériennes supplémentaires qui sont choisies parmi le phylum bactérien Firmicutes, dans laquelle la au moins une première souche bactérienne et les au moins trois souches bactériennes supplémentaires sont quatre souches bactériennes différentes, dans laquelle les au moins trois souches bactériennes supplémentaires sont choisies de préférence dans le groupe
i) des familles bactériennes Selenomonadaceae, Lachnospiraceae et Lactobacillaceae, dans laquelle au moins trois des quatre souches bactériennes différentes sont choisies de manière particulièrement préférée parmi différentes familles bactériennes ; et/ou
ii) des espèces bactériennes *Megamonas funiformis*, *Anaerotignum lactatifermentans, Ligilactobacillus salivarius, Lactobacillus crispatus* et *Limosilactobacillus oris,* dans laquelle les au moins quatre souches bactériennes différentes sont choisies de manière particulièrement préférée parmi différentes espèces bactériennes.

6. Nourriture pour poules selon l'une quelconque des revendications 1 à 5, **caractérisée en ce que** la composition contient, en plus de la au moins une première souche bactérienne, au moins quatre souches bactériennes supplémentaires qui sont choisies parmi le phylum bactérien Firmicutes, dans laquelle la au moins une première souche bactérienne et les au moins quatre souches bactériennes supplémentaires sont cinq souches bactériennes différentes, dans laquelle les au moins quatre souches bactériennes supplémentaires sont choisies de préférence dans le groupe
i) des familles bactériennes Selenomonadaceae, Lachnospiraceae et Lactobacillaceae, dans laquelle de manière particulièrement préférée au moins trois des cinq souches bactériennes différentes proviennent du groupe de la famille bactérienne Lactobacillaceae, au moins une des cinq souches bactériennes provient du groupe de la famille bactérienne Selenomonadaceae et au moins une des cinq souches bactériennes provient de la famille bactérienne des Lachnospiraceae ; et/ou
ii) des espèces bactériennes *Megamonas funiformis*, *Anaerotignum lactatifermentans, Ligilactobacillus salivarius, Lactobacillus crispatus* et *Limosilactobacillus oris,* dans laquelle les au moins cinq souches bactériennes différentes sont choisies de manière particulièrement préférée parmi différentes espèces bactériennes.

7. Nourriture pour poules selon l'une quelconque des revendications 1 à 6, **caractérisée en ce que** la au moins une deuxième souche bactérienne est choisie dans le groupe
i) des familles bactériennes Rikenellaceae et Bacteriodaceae, de manière particulièrement préférée choisie dans la famille bactérienne Rikenellaceae ; et/ou
ii) des espèces bactériennes *Alistipes onderdonkii* et *Bacteroides dorei*, de manière particulièrement préférée dans l'espèce bactérienne *Alistipes onderdonkii.*

8. Nourriture pour poules selon l'une quelconque des revendications 1 à 7, **caractérisée en ce que** la composition contient au moins deux souches bactériennes différentes choisies parmi le phylum bactérien Bacteroidetes, dans laquelle les au moins deux souches bactériennes différentes sont de préférence choisies dans le groupe
i) des familles bactériennes Rikenellaceae et Bacteriodaceae, dans laquelle de manière particulièrement préférée au moins une souche bactérienne est choisie dans la famille bactérienne Rikenellaceae et au moins une souche bactérienne est choisie dans la famille bactérienne Bacteroidaceae ; et/ou
ii) des espèces bactériennes *Alistipes onderdonkii* et *Bacteroides dorei*, dans laquelle de manière particulièrement préférée au moins une souche bactérienne est choisie dans l'espèce bactérienne *Alistipes onderdonkii* et au moins une souche bactérienne est choisie dans l'espèce bactérienne *Bacteroides dorei.*

9. Nourriture pour poules selon l'une quelconque des revendications 1 à 8, **caractérisée en ce que** la composition contient en outre au moins une souche bactérienne supplémentaire choisie parmi le phylum bactérien Proteobacteria, dans laquelle la au moins une souche bactérienne supplémentaire est de préférence choisie dans
i) la famille bactérienne Enterobacteriaceae ; et/ou
ii) le genre bactérien Escherichia, de préférence l'espèce bactérienne *Escherichia marmotae.*

10. Nourriture pour poules selon l'une quelconque des revendications 1 à 9, **caractérisée en ce que** la souche bactérienne supplémentaire, qui est choisie parmi le phylum bactérien Actinobacteria, est choisie dans
i) la famille bactérienne Bifidobacteriaceae ; et/ou
ii) l'espèce bactérienne *Bifidobacterium saeculare.*

11. Nourriture pour poules selon l'une quelconque des revendications 1 à 10, **caractérisée en ce que** la composition
i) est liquide et se trouve de préférence dans une capsule ; ou
ii) est essentiellement solide et se présente de préférence sous forme de comprimé, de granulé ou de poudre.

12. Nourriture pour volaille selon l'une quelconque des revendications 1 à 11, **caractérisée en ce que** la composition
i) contient au moins une première souche bactérienne en une quantité d'au moins 10⁸ UFC/cm³, de préférence d'au moins 10⁹ UFC/cm³, par rapport au volume total de la composition ; et/ou
ii) contient au moins une deuxième souche bactérienne en une quantité d'au moins 10⁸ UFC/cm³, de préférence d'au moins 10⁹ UFC/cm³, par rapport au volume total de la composition ; et/ou
iii) contient au moins une souche bactérienne du phylum bactérien Proteobacteria en une quantité d'au moins 10⁸ UFC/cm³, de préférence d'au moins 10⁹ UFC/cm³, par rapport au volume total de la composition, dans laquelle la souche bactérienne est de préférence choisie dans la famille bactérienne Enterobacteriaceae, de manière particulièrement préférée dans le genre bactérien *Escherichia* ; et/ou
iv) contient au moins une souche bactérienne supplémentaire du phylum bactérien Actinobacteria en une quantité d'au moins 10⁸ UFC/cm³, de préférence d'au moins 10⁹ UFC/cm³, par rapport au volume total de la composition, dans laquelle la souche bactérienne est de préférence choisie dans la famille bactérienne Bifidobacteriaceae, de manière particulièrement préférée dans l'espèce bactérienne *Bifidobacterium saeculare* ; et/ou
v) contient au moins une souche bactérienne choisie dans l'espèce bactérienne *Ligilactobacillus salivarius* en une quantité d'au moins 10⁸ UFC/cm³, de préférence d'au moins 10⁹ UFC/cm³, par rapport au volume total de la composition ; et/ou
vi) contient au moins une souche bactérienne choisie dans l'espèce bactérienne *Lactobacillus crispatus* en une quantité d'au moins 10⁸ UFC/cm³, de préférence d'au moins 10⁹ UFC/cm³, par rapport au volume total de la composition ; et/ou
vii) contient au moins une souche bactérienne choisie dans l'espèce bactérienne *Limosilactobacillus oris* en une quantité d'au moins 10⁸ UFC/cm³, de préférence d'au moins 10⁹ UFC/cm³, par rapport au volume total de la composition.

13. Nourriture pour poules selon l'une quelconque des revendications 1 à 12, dans lequel la nourriture est de la nourriture pour poussins de poules.

14. Nourriture pour poules selon l'une quelconque des revendications 1 à 13, **caractérisé en ce que** la nourriture pour poules
a) contient une source de protéines non microbiennes, de préférence une source de protéines végétales et/ou une source de protéines animales, de manière particulièrement préférée au moins des composants de soja, de pois, de haricots et/ou de vers ; et/ou
b) contient une source non microbienne de glucides, de préférence une source végétale de glucides, de manière particulièrement préférée au moins des composants de maïs, d'orge, de blé, d'avoine, de riz, de soja et/ou de pommes de terre ; et/ou
c) contient une source non microbienne de matière grasse, de préférence une source de matière grasse végétale, de manière particulièrement préférée au moins des composants de graines de tournesol ; et/ou
d) contient une source inorganique de calcium, de préférence au moins des composants de calcaire conchylien ; et/ou
e) contient une source de carotène, de préférence une source végétale de β-carotène, de manière particulièrement préférée au moins des composants de carottes ; et/ou
f) contient de la méthionine en une quantité de 0,2 à 0,6 % en poids, de préférence de 0,3 à 0,5 % en poids, de manière particulièrement préférée de 0,35 à 0,42 % en poids, par rapport à la masse totale de la nourriture pour poules.
